Europäisches Patentamt

European Patent Office

Office européen des brevets

(11) Numéro de publication: **0 215 990**
**A1**

(12) **DEMANDE DE BREVET EUROPEEN**

(21) Numéro de dépôt: 85401701.9

(51) Int. Cl.⁴: **F03B 3/12** , F03B 3/18

(22) Date de dépôt: 30.08.85

(43) Date de publication de la demande:
01.04.87 Bulletin 87/14

(84) Etats contractants désignés:
AT BE CH DE FR GB IT LI LU NL SE

(71) Demandeur: **Lasgoute, Franc**
**Plaisance**
**F-47330 Castillonnes(FR)**

(72) Inventeur: **Lasgoute, Franc**
**Plaisance**
**F-47330 Castillonnes(FR)**

(74) Mandataire: **Morelle, Guy Georges Alain**
**Cabinet SCOPI 1, Avenue de Rangueil**
**F-31400 Toulouse(FR)**

(54) **Turbine hydraulique à usage domestique.**

(57) La présente invention concerne les turbines hydrauliques.

Cette turbine entraîne une génératrice de courant (22) et comporte une bâche (1), un rotor à aubages (6) monté rotatif autour d'un arbre (10) dans ladite bâche, des aubages fixes de distribution (3) étant situés à l'entrée (2) dudit rotor. Cette turbine est remarquable en ce que ledit rotor comporte deux première et seconde parties (7, 8) et un anneau de liaison,

-ladite première partie (7) étant constituée d'une première couronne d'aubages (13, 14 ...) dont le bord d'attaque (9) est sensiblement parallèle à l'axe de rotation dudit arbre (10), l'espace compris entre deux des dits aubages de cette dite première partie s'approfondissant suivant une direction parallèle audit axe,

-ladite seconde partie (8) étant constituée d'une seconde couronne d'aubages (16, 17 ...),

-les deux dites première et seconde parties étant solidaires dudit anneau de liaison et situées de part et d'autre dudit anneau, l'espace le plus profond, compris entre deux des dits aubages (13, 14...), étant situé du côté dudit anneau.

fig. 3

## TURBINE HYDRAULIQUE A USAGE DOMESTIQUE

La présente invention concerne les turbines hydrauliques destinées à fournir de l'énergie électrique par exploitation des chutes d'eau, artificielles ou non, et relève plus précisément d'une classe de ces machines parfois qualifiées de micro-turbines destinées à l'usage domestique.

Les turbines hydrauliques couramment fabriquées voient leur type varier essentiellement selon la hauteur de chute d'eau à exploiter. Ces turbines sont généralement construites dans le cadre d'installations de centrales hydrauliques. Leur taille est importante, pouvant atteindre des diamètres allant du mètre à la dizaine de mètres et les pièces essentielles sont des pièces de fonderie, usinées ensuite dans de rares ateliers spécialisés. Les puissances moyennes délivrées par ces turbines sont par exemple de l'ordre du MegaWatt.

Par contre, les turbines destinées à exploiter les faibles hauteurs de chute sont généralement celles du type dit "Francis" ou à hélice ou "Kaplan". Le problème essentiel dans la conception de ces machines est celui de pouvoir réguler l'arrivée d'eau de façon à maintenir constante la vitesse de rotation, alors que la hauteur de chute peut fluctuer, ainsi que la puissance demandée sur l'arbre en sortie de ces machines. La régulation ne doit en aucune façon entraîner des perturbations dans l'écoulement au travers de la machine, qui seraient susceptibles d'entraîner une perte d'énergie et donc de diminuer le rendement de cette machine.

Dans le cadre des structures des turbines "Francis" ou "à hélice", l'organe chargé de modifier la régulation est généralement constitué par un ensemble d'aubages orientables appelés distributeurs. Par exemple, pour la turbine "Kaplan", on agit sur le pas de l'hélice du rotor.

Dans tous les cas comme ceux qui viennent d'être exposés ci-dessus, le système de régulation est mécaniquement très complexe, ce qui fait que les turbines sont d'un prix de revient relativement onéreux, ce qui limite considérablement leur mise sur le marché et, de ce fait, leur utilisation.

La turbine selon la présente invention est d'un type qui peut être apparenté à celui de la turbine "Francis". L'invention se propose plus particulièrement de réaliser une turbine d'une conception relativement plus simple que celles de l'art antérieur du même type, tout en tendant à pallier leurs inconvénients, notamment en permettant la réalisation d'une régulation très simple, sans augmenter le coût de revient de fabrication et pouvant même, dans certains cas, le diminuer.

Plus précisément, la présente invention a pour objet une turbine hydraulique apte à entraîner une génératrice de courant, comportant une bâche, un rotor à aubage monté rotatif autour d'un arbre dans ladite bâche, des aubages fixes de distribution étant situés à l'entreé du rotor caracté risée en ce que le rotor comporte deux première et seconde parties et un anneau de liaison, ladite première partie étant constituée d'une première couronne d'aubages dont le bord d'attaque est sensiblement parallèle à l'axe de rotation dudit arbre, l'espace compris entre deux desdits aubages de cette dite première partie s'approfondissant suivant une direction parallèle audit axe, ladite seconde partie étant constituée d'une seconde couronne d'aubages, les deux dites première et seconde parties étant solidaires dudit anneau et situées de part et d'autre dudit anneau, ledit espace le plus profond étant situé du côté dudit anneau.

D'autres caractéristiques et avantages de la présente invention apparaîtront au cours de la description suivante donnée en regard des dessins annexés à titre illustratif mais nullement limitatif, dans lesquels :

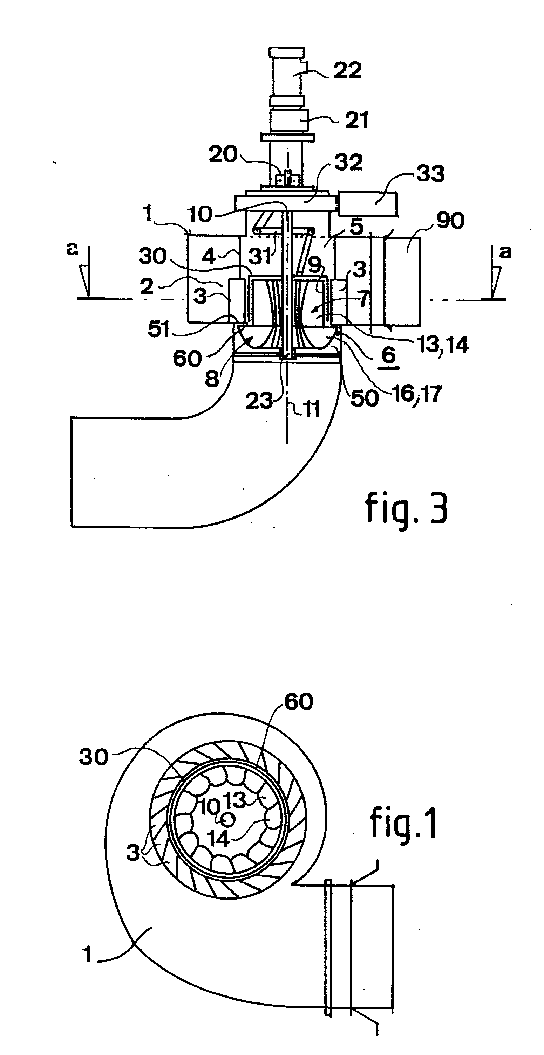

-les figures 1, 3 et 4 représentent par différentes vues relativement schématiques un mode de réalisation d'une turbine selon l'invention, la figure 1 étant une coupe définie en "a a" sur la figure 3, et

-la figure 2 représente un détail de construction, vu en perspective, de la turbine et plus particulièrement concernant le rotor en accord avec les figures 1, 3 et 4.

L'ensemble des figures représentant un même et unique mode de réalisation, il est évident que les mêmes références désignent les mêmes moyens et que, en fonction de celles-ci, il sera nécessaire de se reporter à l'une ou l'autre de ces figures afin d'identifier l'élément désigné.

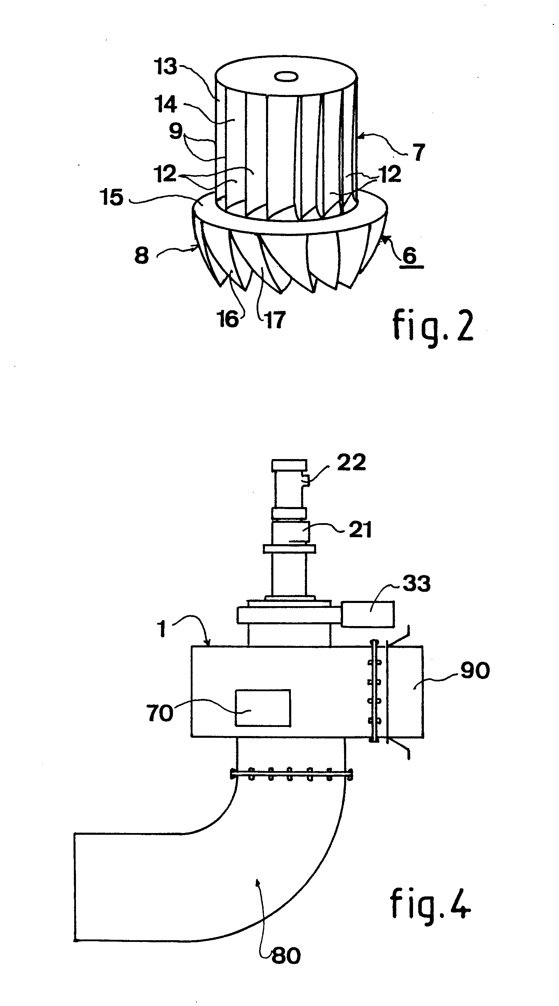

Ainsi la turbine apte à fonctionner avec un courant d'eau comporte une bâche en spirale 1 avantageusement de section rectangulaire. A la sortie 2 de cette bâche 1 l'eau traverse des aubages fixes de distribution 3. Ces aubages fixes sont répartis sur la paroi cylindrique 4 définissant une chambre 5 au centre cylindrique, de telle façon que les aubages 3 forment une couronne entourant au moins partiellement cette chambre 5. Les aubages fixes 3 de distribution ont une inclinaison qui est définie pour obtenir une entrée de l'eau dans cette chambre 5 sans choc sur un rotor 6 qui est positionné au moins partiellement dans cette chambre 5. Le rotor 6 est conçu en deux parties principales 7 et 8 comme représenté en perspective sur la figure 2 et qui apparaissent en coupe sur la figure 3. La première partie 7 de forme générale cylindrique de révolution est disposée dans la chambre 5 et a un diamètre extérieur inférieur au diamètre intérieur de la couronne définie par les aubages fixes 3, de façon à délimiter un espace annulaire 60 entre la couronne d'aubages fixes 3 et celle des aubages 13, 14 ... de la première partie 7 du rotor 6. Cette première partie 7 est essentiellement constituée par une pluralité d'aubages 13, 14 ... dont les bords d'attaque 9, situés du côté des aubages fixes 3, sont essentiellement parallèles à l'axe 11 de l'arbre de rotation 10 sur lequel est monté le rotor 6, l'espace 12 compris entre deux de ces aubages 13, 14 ... s'approfondissant à mesure que l'on s'approche de la seconde partie 8 qui est située en dessous de cette première partie 7, ces deux parties 7 et 8 étant solidaires du même arbre 10. La forme caractéristique de ces aubages 13, 14 ... permet essentiellement de diminuer la perte de charge d'écoulement de l'eau vers la deuxième partie 8 du rotor 6. De plus la forme de la section de cet espace 12, formant un canal, est étudiée pour que le fluide s'écoule de façon uniforme vers cette seconde partie 8.

Cette seconde partie 8, associée à la première partie 7 suivant le même arbre 10, est essentiellement constituée d'une couronne d'aubages 16, 17 ... dont le diamètre est supérieur à celui de la couronne d'aubages 13, 14 ... de la première partie 7. Cette seconde partie 8 est fixée sur un anneau 15, sur lequel est fixée l'extrémité des aubages 13, 14 ..., les deux parties 7 et 8 étant alors situées de part et d'autre de cet anneau 15. La différence de diamètre entre les deux parties 7 et 8 permet, lorsque le rotor est disposé sur son arbre 10, de faire que la première partie constituée par la pluralité des aubages 13, 14 ... soit située dans la chambre 5 formée par les aubages fixes 3 tandis que la seconde partie formée par les aubages 16, 17 ... soit située dans une chambre annexe 50 juxtaposée à la première chambre 5. La chambre 50 a un diamètre supérieur à celui de la chambre 5 et cette chambre 50 est en dessous de la première par rapport au sens d'écoulement de l'eau, ce qui fait que les parois latérales cylindriques de ces chambres 5, 50 sont séparées par une paroi en forme d'anneau plat 51. De cette façon, quand le rotor est positionné sur son axe de rotation 10 et est apte à pivoter par l'action de l'écoulement de l'eau, la première partie 7 d'aubages 13, 14 ... est située dans la chambre 5, tandis que la deuxième partie d'aubages 16, 17 ... est, elle, située dans la seconde chambre 50 et pivote de façon que l'anneau 15 soit à proximité de cette paroi de séparation 51 et reste sensiblement parallèle à cette dernière.

L'arbre 10 du rotor tourne d'un côté situé vers l'amont sur un palier à billes et à rouleaux 20. Dans sa partie située vers l'amont, il assure par un accouplement approprié, comme un multiplicateur mécanique 21, l'entraînement d'une génératrice 22. Sur sa partie située vers l'aval, il tourne sur un palier 23 qui peut être avantageusement un palier du type à lubrification à eau.

La turbine comporte en plus des moyens de régulation de la vitesse de rotation du rotor. Ces moyens comportent, par exemple, un mesureur de la fréquence du signal délivré par la génératrice 22, un relais à deux seuils connecté à la sortie du mesureur, un cylindre obturateur 30, et des moyens de commande du déplacement du cylindre reliés à la sortie du relais. Le cylindre obturateur 30 est entièrement contenu dans la chambre 5. Le mesureur délivre à sa sortie un signal de commande fonction de celui délivré par la génératrice 22 et comparé à la valeur des seuils du relais. Le résultat de la comparaison permet, par les moyens de commande, de déplacer en conséquence le cylindre obturateur 30.

Le cylindre obturateur 30 est alors apte à coulisser dans l'espace annulaire 60 défini entre les aubages fixes 3 et les aubages 13, 14 ... du rotor 6. Ce cylindre 30 en forme de cloche coulisse le long de l'arbre 10 et vient recouvrir dans sa position extrême l'ensemble de la première partie 7 du rotor 6, de telle façon que le bord de ce cylindre vienne presque au contact de la paroi de séparation 51 entre les deux chambres 5 et 50 définies ci-dessus. Par déplacement du cylindre 30 entre ses deux positions extrêmes, totalement en dehors de l'espace ou complètement enfoncé dans celui-ci, on peut ainsi faire varier la section de passage de l'eau entre les aubages fixes 3 et les aubages 13, 14 ... de la première partie du rotor 6 et, par conséquent, faire varier le débit de l'eau qui entraîne en rotation le rotor 6 et donc réguler la vitesse de rotation du rotor 6.

A titre d'exemple, ce cylindre 30 est mu par l'intermédiaire de biellettes 31 et d'un palonnier 32 au moyen d'un vérin hydraulique ou à vis 33 commandé par exemple par un asservissement électronique traitant le signal délivré par la génératrice 22. L'ensemble d'asservissement étant connu en lui-même, il ne sera pas plus amplement décrit ici.

Ce système de régulation au moyen d'un cylindre mobile 30 agit plus sur le débit de l'eau que sur sa vitesse d'écoulement : ceci fait que les vitesses d'entrée du fluide sont peu variables dans la plage de fonctionnement de la machine et explique que l'on puisse se dispenser d'aubages d'entrée qui soient orientables comme dans le cas des dispositifs de l'art antérieur. Enfin ce système de régulation par cylindre mobile ne peut être utilisé que grâce à la forme particulière du rotor, notamment en ce qui concerne la partie 7 associée à la partie 8 qui déborde de cette partie 7 de façon à aménager l'espace 60 tel que décrit ci-dessus entre les aubages de distribution 3 et les aubages 13, 14 ... de la première partie 7 du rotor 6.

En définitive, le modèle de turbine tel que décrit ci-dessus, par

-une construction en tôle soudée ou en matière plastique par les procédés de rotomoulage ou d'injection ou encore par une réalisation en fibre de verre ou de carbonne noyé sous résine, de ses principales pièces,

-son système de régulation à la fois simple et efficace ne demandant pas de grande mise en oeuvre de réalisation mécanique,

-sa facilité de maintenance et de réparation notamment par des portes d'accès 70, réalisées par exemple dans les parois latérales de la bâche 1, - son tuyau de sortie 80 de forme coudée favorisant le rendement par la dépression agissant sur les aubages inférieurs du rotor,

-son domaine d'application en pleine extension dans le cadre des économies d'énergies par l'exploitation des ressources naturelles,

est tout à fait susceptible d'intéresser artisans et industriels pour équiper de petits cours d'eau, moulin à amarrer etc... avec un matériel à portée financière de particuliers ou de petites collectivités.

Son installation est nettement facilitée par la présence d'une bouche a sceller 90 telle que représentée sur la figure 3, d'adaptation facile au corps de turbine par un ensemble de boulonnerie assorti si nécessaire de joints.

**Revendications**

1. Turbine hydraulique entraînant une génératrice de courant (22) et comportant une bâche (1), un rotor à aubages (6) monté rotatif autour d'un arbre (10) dans ladite bâche, des aubages fixes de distribution (3) étant situés à l'entrée - (2) dudit rotor, CARACTERISEE EN CE QUE ledit rotor comporte deux première et seconde parties (7, 8) et un anneau de liaison (15),

-ladite première partie (7) étant constituée d'une première couronne d'aubages (13, 14 ...) dont le bord d'attaque (9) est sensiblement parallèle à l'axe de rotation dudit arbre (10), l'espace (12) compris entre deux des dits aubages de cette dite première partie s'approfondissant suivant une direction parallèle audit axe,

-ladite seconde partie (8) étant constituée d'une seconde couronne d'aubages (16, 17 ...),

-les deux dites première et seconde parties étant solidaires dudit anneau (15) et situées de part et d'autre dudit anneau, l'espace (12) le plus profond étant situé du côté dudit anneau.

2. Turbine hydraulique selon la revendication 1, CARACTERISEE EN CE QUE la bâche (1), les aubages fixes (3) du distributeur et (13, 14 ..., 16, 17 ...) du rotor ont des formes dérivant de surfaces développables.

3. Turbine selon la revendication 1 ou 2, CARACTERISEE EN CE QUE la régulation de la vitesse de rotation dudit rotor (6) s'effectue par mesure de fréquence de la génératrice (22) assurée par un relais en fonction de deux seuils haut - (ouverture) et bas (fermeture), et par déplacement d'un cylindre (30) dès qu'un des seuils est atteint, ce cylindre (30) coulissant dans l'espace (60) défini entre les aubages fixes (3) du distributeur et la première couronne d'aubages (13, 14 ...) du rotor - (6), le mouvement de ce cylindre faisant varier la section d'entrée et, par conséquent, le débit d'eau, ce cylindre (30) étant mû par l'intermédiaire de biellettes (31) et d'un palonnier (32) au moyen d'un vérin hydraulique ou à vis (33).

4. Turbine selon l'une des revendications précédentes, CARACTERISEE EN CE QUE ledit arbre (10) tourne sur un pallier à billes et à rouleaux dans sa partie située vers l'amont assurant l'entraînement par un multiplicateur (21) de ladite génératrice (22) et vers l'aval sur un pallier (23) lubrifié à l'eau.

5. Turbine selon l'une des revendications 1 à 4, CARACTERISEE EN CE QUE la bâche (1) est réalisée en tôle pliée et soudée.

6. Turbine selon l'une des revendications 1 à 4, CARACTERISEE EN CE QUE la bâche (1) est réalisée en matière plastique par injection ou rotomoulage avec des raidisseurs en renforts métalliques noyés dans la masse et servant à l'assemblage ou à la fixation des accessoires.

7. Turbine selon l'une des revendications 1 à 4, CARACTERISEE EN CE QUE la bâche (1) est réalisée en fibres de verre ou de carbonne noyées sous résine avec des raidisseurs ou des renforts métalliques noyés dans la masse servant à l'assemblage ou à la fixation des accessoires.

8. Turbine selon l'une quelconque des revendications précédentes, CARACTERISEE EN CE QU'elle comporte, en sortie de bâche, un tuyau - (80) de forme coudée favorisant le rendement par dépression agissant sur les aubages de ladite deuxième partie (8) du rotor (6).

9. Turbine selon l'une des revendications précédentes, CARACTERISEE EN CE QU'il est prévu une bouche (90) à sceller de forme variable mais d'adaptation facile à ladite bâche par un ensemble de boulonnerie assorti de joints.

10. Turbine selon l'une quelconque des revendications précédentes, CARACTERISEE EN CE QU'elle comporte des portes (70) de maintenance réalisées dans la paroi de ladite bâche.

11. Turbine selon l'une quelconque des revendications précédentes, CARACTERISEE EN CE QUE le diamètre extérieur de ladite seconde couronne d'aubages (16, 17 ...) a une valeur supérieure à celui de la première couronne d'aubages (13, 14 ...).

12. Turbine selon la revendication 1, CARACTERISEE EN CE QUE ledit rotor (6) est apte à pivoter dans une enceinte constituée de deux chambres (5, 50), une première chambre (5), dont une partie de la paroi cylindrique est formée par lesdits aubages fixes (3) de distribution, entourant ladite première partie (7) dudit rotor (6), une seconde chambre (50) jouxtant la première (5) et dans laquelle est située ladite deuxième partie (8) dudit rotor (6), et d'une paroi latérale annulaire - (51) de séparation située entre les deux dites chambres (5, 50) et recouvrant sensiblement l'anneau (15).

fig. 3

fig.1

13
14
9
12
15
8
16 17
7
12
6

fig.2

22
21
33
1
70
90
80

fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 611 578 (BIGGS)<br><br>* COlonne 3, ligne 12 - colonne 4, ligne 71 *<br><br>--- | 1,2,5, 9 | F 03 B 3/12<br>F 03 B 3/18 |
| A | GB-A- 216 812 (MOODY)<br>* Page 2, ligne 58 - page 3, ligne 7 *<br><br>--- | 1,3 | |
| A | FR-A- 879 950 (HUNAUT)<br>* Page 1, lignes 47-53; figure 1 *<br><br>--- | 4,8,9 | |
| A | DE-A-2 126 130 (BRENSCHEDE)<br>* Page 1, ligne 22 - page 2, ligne 15 *<br><br>----- | 3 | |

**DOMAINES TECHNIQUES RECHERCHES (Int. Cl.4)**

F 03 B

Le présent rapport de recherche a été établi pour toutes les revendications

| Lieu de la recherche | Date d'achèvement de la recherche | Examinateur |
|---|---|---|
| LA HAYE | 14-04-1986 | DE WINTER P.E.F. |